**Europäisches Patentamt**

**European Patent Office**

**Office européen des brevets**

(19)

(11) Veröffentlichungsnummer: **0 044 069**
**B1**

(12)

# EUROPÄISCHE PATENTSCHRIFT

(45) Veröffentlichungstag der Patentschrift:
22.05.85

(51) Int. Cl.⁴: **H 04 L 11/00**

(21) Anmeldenummer: **81105476.6**

(22) Anmeldetag: **13.07.81**

(54) **System zum Schnellaufbau von Wählverbindungen in Kommunikations-netzen.**

(30) Priorität: **16.07.80 DE 3026950**

(43) Veröffentlichungstag der Anmeldung:
**20.01.82 Patentblatt 82/3**

(45) Bekanntmachung des Hinweises auf die Patenterteilung:
**22.05.85 Patentblatt 85/21**

(84) Benannte Vertragsstaaten:
**BE FR GB IT NL**

(56) Entgegenhaltungen:
**TELCOM REPORT, Band 3, Heft 3, Juni 1980, Seiten 222-227 München, DE. R. LUEDER: "Kommunikationsdienste und Teilnehmertechnik im dienstintegrierten Digitalnetz"**
**COLLOQUE INTERNATIONAL DE COMMUTATION, International switching symposium, 7.-11. Mai 1979, Seiten 773-780 P. GERKE et al.: "DTN, un réseau téléphonique entièrement numérique pour la voix, les données, le telex et la télécopie"**

(73) Patentinhaber: **Siemens Aktiengesellschaft, Berlin und München Wittelsbacherplatz 2, D-8000 München 2 (DE)**

(72) Erfinder: **Vollmeyer, Werner, Dr., Wertheimer Strasse 112, D-8000 München 60 (DE)**

**Beschreibung**

Die vorliegende Erfindung betrifft ein System zum Schnellaufbau von Wählverbindungen in Kommunikationsnetzen, insbesondere in digitalen Nachrichtenübertragungsnetzen mit rechnergesteuerten Wählvermittlungsstellen, bei dem jeweils zwischen einem Teilnehmerendgerät und der ihm zugeordneten Wählvermittlungsstelle, die einen Knotenpunkt des Kommunikationsnetzes bildet, ein relativ langsam reagierender Signalisierungskreis und ein relativ schnell reagierender Nutzkreis vorgesehen sind, wobei über den relativ schnell reagierenden Nutzkreis auch Wählinformationen übertragen werden können.

In bestimmten Aufgabengebieten der Datenverarbeitung und Datenübertragung sind kurze Datenübertragungszeiten erforderlich oder zumindest gewünscht. Beispielsweise ist es für Buchungs- und Auskunftsdienste in vielen Fällen erforderlich, dass diese Dienste betreffende Daten über grosse Entfernungen – im Extremfall von Kontinent zu Kontinent – in kürzestmöglicher Zeit übertragen werden. Dies kann dadurch erreicht werden, dass

– zum einen Daten zwischen räumlich getrennten Einrichtungen (Datenquellen, -senken und/oder Datenverarbeitungsanlagen) im Echtzeitbetrieb mit möglichst hoher Geschwindigkeit übertragen werden und

– zum anderen keine unnötigen oder unzumutbaren Wartezeiten zugelassen werden.

Aus der Druckschrift COLLOQUE INTERNATIONAL DE COMMUTATION, International Switching Symposium ist unter dem Titel «DTN, un réseau téléphonique entièrement numérique pour la voix, les données, le telex et la télécopie», S. 777, linke Spalte, Zeile 22 – Seite 778, rechte Spalte, Zeile 1 sowie Fig. 7 und 8 ein System der eingangs genannten Art bekannt, bei dem die Signalisierung in der sog. in-slot-Technik vorgenommen wird.

Es ist auch bekannt, dass, um den bestehenden Forderungen zu genügen, Verbindungsleitungen zum Übertragen von Daten zwischen Einrichtungen der oben genannten Art als sog. Standleitungen realisiert werden. Solche Standleitungen, d.h. Leitungen, die jeweils zwischen zwei Einrichtungen der oben genannten Art fest angeordnet sind, um Daten in beiden Richtungen übertragen zu können, sind aus ebenfalls bekannten Gründen, wie beispielsweise dem Erfordernis von Leitungsmieten, sehr teuer.

Der vorliegenden Erfindung liegt die Aufgabe zugrunde, ein System anzugeben, mittels dessen die an sich der genannten Problemstellung gerecht werdenden Standleitungen durch Wählverbindungen zu ersetzen. Dazu muss gemäss der Aufgabenstellung ein System zum Schnellaufbau solcher Wählverbindungen zur Verfügung gestellt werden.

Die der Erfindung zugrundeliegende Aufgabe wird in einem System zum Schnellaufbau von Wählverbindungen in Kommunikationsnetzen, insbesondere in digitalen Nachrichtenübertragungsnetzen mit rechnergesteuerten Wählvermittlungsstellen, durch die in kennzeichnenden Teil des Patentanspruchs 1 angegebenen Massnahmen gelöst.

Die Erfindung bietet den Vorteil, dass in Kommunikationsnetzen, insbesondere in digitalen Nachrichtenübertragungsnetzen mit rechnergesteuerten Wählvermittlungsstellen bisher verwendete Standleitungen zum schnellen Übertragen von Daten durch kostengünstigere Wählverbindungen ersetzt werden können, ohne dass dadurch eine wesentliche Vergrösserung der Datenübertragungszeit in Kauf genommen werden muss.

Eine vorteilhafte Weiterbildung der Erfindung wird durch Patentanspruch 6 angegeben.

Andere Weiterbildungen der Erfindung sind durch die in weiteren Unteransprüchen angegebenen Merkmale gekennzeichnet.

Im folgenden wird die Erfindung anhand mehrerer, Ausführungsbeispiele für die Erfindung betreffender Figuren im einzelnen erläutert.

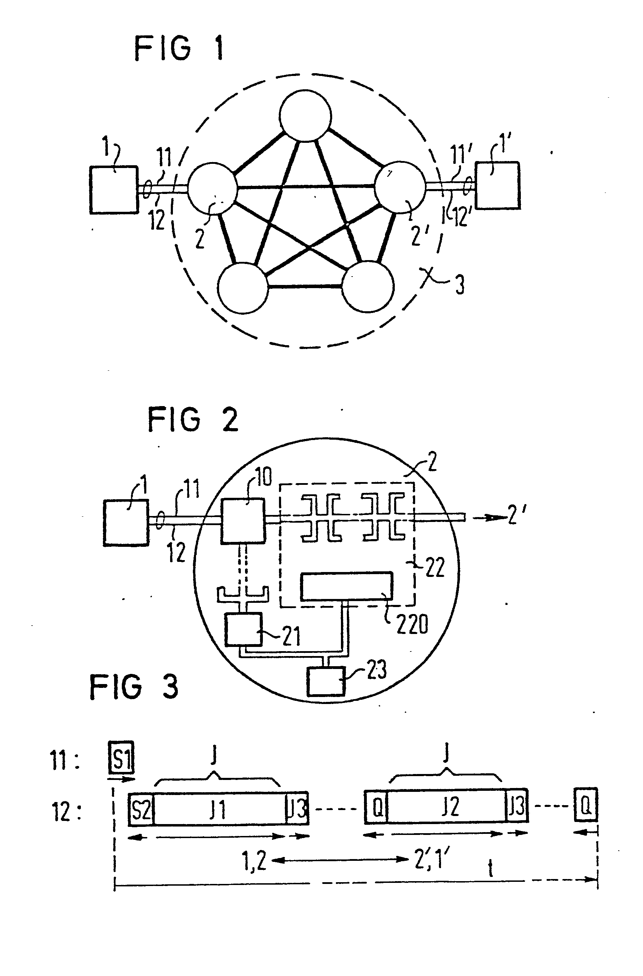

Fig. 1 zeigt als Ausführungsbeispiel den prinzipiellen Aufbau eines Kommunikationsnetzes 3 mit als Knotenpunkte fungierenden Wählvermittlungsstellen 2 ... 2' und an diese jeweils über einen Signalisierungskreis 11 bzw. 11' und einen Nutzkreis 12 bzw. 12' angeschlossenen Teilnehmerendgeräten 1 ... 1'.

Fig. 2 zeigt in Form eines Blockschaltbildes schematisch den Aufbau des für die Erfindung wesentlichen Teils einer Wählvermittlungsstelle 2 mit jeweils einem Teilnehmerendgerät 1 individuell zugeordneter Teilnehmerschaltung 10, einem zumindest einer Gruppe von Teilnehmerschaltungen 10 zugeordneten Schnellwählempfänger 21, einem beliebig realisierbaren Koppelnetz 22 mit zugehöriger Koppelnetzsteuerung 220 und einem zentral oder teilzentral angeordneten Rechner 23.

Fig. 3 zeigt schematisch Ablauf und Zuordnung von Signalen, nämlich eines Anreizsignals S1 in Vorwärtsrichtung und eines Bereitschaftssignals S2 in Rückwärtsrichtung, einer Schnellwählinformation I1, einer Nutzinformation I2 und Endesignalen I3 sowie eines zusätzlichen Quittungssignals Q.

Wie bereits erläutert, zeigt Fig. 1 als Ausführungsbeispiel den prinzipiellen Aufbau eines Kommunikationsnetzes 3 mit als Knotenpunkte fungierenden Wählvermittlungsstellen 2 ... 2' und an diese jeweils über einen Signalisierungskreis 11 bzw. 11' und einen Nutzkreis 12 bzw. 12' angeschlossenen Teilnehmerendgeräten 1 ... 1'. Der für die Erfindung wesentliche Teil einer Wählvermittlungsstelle 2 ist, wie bereits ebenfalls erläutert, in Fig. 2 in Form eines Blockschaltbildes schematisch dargestellt, wobei jeweils ein Teilnehmerendgerät 1 mit einer diesem individuell zugeordneten Teilnehmerschaltung 10 über einen Signalisierungskreis 11 und einen Nutzkreis 12 zusammengeschaltet ist. Ein zumindest einer Gruppe aller Teilnehmerschaltungen 10 innerhalb der Wählvermittlungsstelle 2 zugeordneter Schnellwählempfänger 21 ist jeweils bedarfsweise an eine Teilnehmerschaltung 10 über einen internen Datenübertragungskanal anzukoppeln. Die Teilnehmerschaltung 10 ist mit einem weiteren Datenübertragungskreis über ein beliebig realisierbares Koppelnetz 22 mit zugehöriger Koppelnetzsteuerung 220 mit einer weiteren Wählvermittlungsstelle 2' verbindbar. Die Teilnehmerschaltung 10 ist ebenfalls über das genannte Koppelnetz 22 mit einer weiteren Teilnehmerschaltung 10 innerhalb derselben Wählvermittlungsstelle 2 in an sich bekannter Weise verbindbar. In dem in Fig. 2 gezeigten Ausführungsbeispiel ist vorausgesetzt, dass die Funktionen des Schnellwählempfängers 21 und der Koppelnetzsteuerung 220 mit Hilfe eines zentral oder zumindest teilzentral angeordneten Rechners 23 steuerbar sind.

Zu einem Schnellaufbau einer abgehenden Wählverbindung gibt das Teilnehmerendgerät 1 in einem ersten Schritt ein Anreizsignal S1 über den Signalisierungskreis 11 zu der Wählvermittlungsstelle 2. Aufgrund dieses Anreizsignals S1 wird in der Wählvermittlungsstelle 2 der einer Gruppe von Teilnehmern oder allen Teilnehmern gemeinsame Schnellwählempfänger 21 an die dem betreffenden Teilnehmer individuell zugeordnete Teilnehmerschaltung 10 gekoppelt. In einem zweiten Schritt überträgt der Schnellwählempfänger 21 ein Bereitschaftssignal S2 zu dem Teilnehmerendgerät 1. Das Teilnehmerendgerät 1 sendet nun in einem dritten Schritt eine dem Wählverbindungswunsch entsprechende Schnellwählinformation I1 zusammen mit einem dieser Information zeitlich nachgeordneten Endesignal I3 über den Nutzkreis 12 zu der Wählvermittlungsstelle 2, vgl. Fig. 3. Anschliessend wird der Schnellwählempfänger 21, nachdem der gewünschte Wählverbindungsaufbau in an sich bekannter Weise von diesem veranlasst wurde, automatisch von der Teilnehmerschaltung 10 abgekoppelt. Dieses Abkoppeln kann auch unmittelbar von dem Schnellwählempfänger 21 selbst durchgeführt werden. Das Bereitschaftssignal S2 wird über den Nutzkreis 12 zu dem Teilnehmerendgerät 1 übertragen.

Erfindungsgemäss ist vorgesehen, dass nach dem Schnellaufbau der abgehenden Wählverbindung ein die Schnellwählinformation I1 bestätigendes Quittungssignal Q von einer einem angewählten Teilnehmerendgerät 1' zugeordneten Zielwählvermittlungsstelle 2' zu dem Teilnehmerendgerät übertragen wird, vgl. Fig. 3. Weiterhin ist erfindungsgemäss vorgesehen, dass die Schnellwählinformation I1 auch zwischen den betreffenden Vermittlungsstellen 2, 2', versehen mit einem Prioritätskennzeichen, übertragen wird. Aufgrund dieses zwischen den Vermittlungsstellen 2, 2' übertragenen Prioritätskennzeichens wird an eine dem angewählten Teilnehmerendgerät 1' individuell zugeordnete Teilnehmerschaltung 10' ein Schnellwählempfänger 21' angekoppelt, der den schnellen Verbindungsaufbauwunsch zum gerufenen Teilnehmer weitergibt.

Eine andere vorteilhafte Weiterbildung der Erfindung sieht vor, dass über den Schnellwählempfänger 21 in an sich bekannter Weise eine Identifizierung der Rufnummer des anreizenden Teilnehmerendgeräts 1 durchgeführt wird. Das gewonnene Identifizierungsergebnis wird erfindungsgemäss in Form einer zusätzlichen Information zusammen mit dem Verbindungsaufbauwunsch übertragen. Dadurch wird es dem angewählten Teilnehmerendgerät 1' ermöglicht, nach Empfang der Nutzinformation und entsprechendem Schnellaufbau der Verbindung automatisch eine Rückwärtsverbindung zu dem ursprünglich anreizenden Teilnehmerendgerät 1 zu veranlassen.

Die Identifizierung des anreizenden Teilnehmerendgerätes hat ausserdem den Vorteil, dass bei einer Abfrage von Daten aus einer Datenbank die Abfrageberechtigung geprüft werden kann. Ausserdem kann in an sich bekannter Weise eine Gebührenerfassung für die in Anspruch genommene Dienstleistung am Ort der dem anreizenden Teilnehmerendgerät zugeordneten Wählvermittlungsstelle und/oder am Ort der in Anspruch genommenen Dienstleistung selbst durchgeführt werden.

Das erfindungsgemässe System ist vorteilhaft in teilweise bereits realisierten, in teilweise geplanten zukünftigen digitalen Kommunikationsnetzen einsetzbar, bei denen beispielsweise ausser einem 64-kbit/s-Nutzkreis noch sog. «outslot»-Kreise mit 8 oder 16 kbit/s für den Teilnehmer zur Verfügung stehen. Ein solcher «out-slot»-Kreis wird nämlich nicht nur für Signalisierungszwecke verwendet werden. Er steht vielmehr in bekannter Weise bedarfsweise auch für Telemetrie und/oder eine zusätzliche Datenübertragung mit zur Verfügung. Der zeitliche Anteil an dem «out-slot»-Kreis für eine Signalisierung ist in einem solchen Kommunikationsnetz – gemessen an der kurzen für eine Signalisierung zur Verfügung stehenden Zeit – relativ klein, weshalb das schnelle Aufbauen von Wählverbindungen ohne besondere Vorkehrungen Schwierigkeiten macht und weshalb die angestrebte kurze Datenübertragungszeit nicht erreichbar ist.

Anstelle des angewählten Teilnehmerendgerätes 1' kann beispielsweise ein Nachrichtennetz in Form eines Datennetzes oder eines «Paket»-Netzes vorgesehen sein.

**Patentansprüche**

1. System zum Schnellaufbau von Wählverbindungen in Kommunikationsnetzen, insbesondere in digitalen Nachrichtennetzen mit rechnergesteuerten Wählvermittlungsstellen, bei dem jeweils zwischen einem Teilnehmerendgerät (1) und der ihm zugeordneten Wählvermittlungsstelle (2), die einen Knotenpunkt des Kommunikationsnetzes (3) bildet, ein relativ langsam reagierender Signalisierungskreis (11) und ein relativ schnell reagierender Nutzkreis (12) vorgesehen sind, wobei über den relativ schnell reagierenden Nutzkreis (12) auch Wählinformationen übertragen werden können, dadurch gekennzeichnet, dass zum Schnellaufbau einer abgehenden Wählverbindung in einem ersten Schritt ein Anreizsignal (S1) von dem Teilnehmergerät (1) über den langsam reagierenden Signalisierungskreis (11) zu der Wählvermittlungsstelle (2) übertragen wird, aufgrund dessen wählvermittlungsstellenseitig ein zumindest einer Gruppe von Teilnehmern gemeinsamer Schnellwählempfänger (21) an eine dem betreffenden Teilnehmer individuell zugeordnete Teilnehmerschaltung (10) gekoppelt wird, dass der Schnellwählempfänger (21) in einem zweiten Schritt ein Bereitschaftssignal (S2) über den relativ schnell reagierenden Nutzkreis (12) zu dem Teilnehmerendgerät (1) überträgt und dass das Teilnehmerendgerät (1) in einem dritten Schritt eine dem Wählverbindungswunsch entsprechende Schnellwählinformation (13) und ein der Nutzinformation (12) zeitlich nachgeordnetes Endesignal (13) in einem einzigen Informationsblock (1) über den relativ schnell reagierenden Nutzkreis (12) zu der Wählvermittlungsstelle (2) überträgt, woraufhin der Schnellwählempfänger (21), nachdem er den gewünschten Wählverbindungsaufbau in an sich bekannter Weise veranlasst hat, automatisch von der Teilnehmerschaltung (10) abgekoppelt wird oder sich abkoppelt.

2. System nach Anspruch 1, dadurch gekennzeichnet, dass nach dem Schnellaufbau der abgehenden Wählverbindung ein die Schnellwählinformation (I1) bestätigendes Quittungssignal (Q) von einer einem angewählten Teilnehmerendgerät (1') zugeordneten Zielwählvermittlungsstelle (2') zu dem Teilnehmerendgerät (1) über dem relativ schnell reagierenden Nutzkreis (12) übertragen wird, das gleichzeitig die Empfangsbereitschaft des angewählten Teilnehmerendgerätes (1') anzeigen kann.

3. System nach Anspruch 1, dadurch gekennzeichnet, dass die Schnellwählinformation (I1) auch zwischen den betreffenden Wählvermittlungsstellen (2, 2'), versehen mit einem Prioritätskennzeichen, übertragen wird.

4. System nach den Ansprüchen 2 und 3, dadurch gekennzeichnet, dass aufgrund des zwischen den Wählvermittlungsstellen (2, 2') übertragenen Prioritätskennzeichens an eine dem angewählten Teilnehmerendgerät (1') individuell zugeordnete Teilnehmerschaltung (10') ein Schnellwählempfänger (21') angekoppelt wird, der den Verbindungsaufbauwunsch zur schnellen Weiterleitung zum angewählten Teilnehmer aufnimmt.

5. System nach Anspruch 1, dadurch gekennzeichnet, dass über den Schnellwählempfänger (21) eine Identifizierung der Rufnummer des anreizenden Teilnehmerendgerätes (1) durchgeführt wird und dass das Identifizierungsergebnis in Form einer zusätzlichen Information zum gerufenen Teilnehmer über den relativ schnell reagierenden Nutzkreis (12) übertragen wird, so dass von dem angewählten Teilnehmerendgerät (1') ein Rückwärtsverbindungsaufbau zu dem ursprünglich rufenden Teilnehmerendgerät (1) veranlasst werden kann.

6. System nach einem der vorhergehenden Ansprüche, dadurch gekennzeichnet, dass der Signalisierungskreis (11) und der Nutzkreis (12) durch eine jeweils zwischen ein Teilnehmerendgerät (1 bzw. 1') und die betreffende individuell

zugeordnete Teilnehmerschaltung (10 bzw. 10') geschaltete Verbindungsleitung realisiert sind und dass der Signalisierungskreis (11) einen Ausserband-Signalkreis (out-slot-Kreis) darstellt.

**Claims**

1. A system for the fast establishment of dialled connections in communications networks, in particular in digital communications networks with computer-controlled dialling exchanges, wherein there are arranged a relatively slow-reacting signalling circuit (11) and a relatively fast-reacting useful circuit (12) between a subscriber terminal device (1) and the dialling exchange (2) assigned thereto which forms a junction of the communications network (3), where items of dialled information can also be transmitted via the relatively fast-reacting useful circuit (12), characterised in that for the fast establishment of an outgoing dialled connection an impulse signal (S1) is transmitted from the subscriber device (1) via the slow-reacting signalling circuit (11) to the dialling exchange (2) in a first step, as a result of which signal a fast-dialling receiver (21) common to at least a group of subscribers on the side of the dialling exchange is coupled to a subscriber circuit (10) individually assigned to the subscriber in question, that in a second step the fast-dialling-receiver (21) transmits a ready signal (S2) to the subscriber terminal device (1) via the relatively fast-reacting useful circuit (12), and that in a third step the subscriber terminal device transmits in one single information block (1) via the relatively fast-reacting useful circuit (12) to the dialling exchange (2) an item of fast-dialling information (13) which corresponds to the dialling connection request, and an end signal (13) which follows the useful information (12) in time, whereupon the fast-dialling receiver (21), having implemented the required dialling connection establishment in known manner, is automatically decoupled or decouples itself from the subscriber circuit (10).

2. A system as claimed in Claim 1, characterised in that following the fast establishment of the outgoing dialled connection, an acknowledgement signal (Q) which confirms the fast dialled information (11) is transmitted from a target dialling exchange (2'), assigned to a selected subscriber terminal device (1'), to the subscriber terminal device (1) via the relatively fast-reacting useful circuit (12) which can simultaneously indicate the readiness of the selected subscriber terminal device (1') to receive.

3. A system as claimed in Claim 1, characterised in that the fast-dialled-information (I1) is also transmitted between the dialling exchanges (2, 2') in question, provided with a priority characteristic.

4. A system as claimed in Claims 2 and 3, characterised in that on the basis of the priority characteristic transmitted between the dialling exchanges (2, 2') a subscriber circuit (10') individually assigned to the selected subscriber terminal device (1') is coupled to a fast-dialling-receiver (21') which receives the connection establishment request for fast transmission to the selected subscriber.

5. A system as claimed in Claim 1, characterised in that an identification of the subscriber number of the calling subscriber terminal device (1) is carried out via the fast-dialling-receiver (21), and that the identification result is transmitted in the form of an additional item of information to the called subscriber via the relatively fast-reacting useful circuit (12), so that the dialled subscriber terminal device (1') can establish a reverse connection path to the originally calling subscriber terminal device (1).

6. A system as claimed in one of the preceding Claims, characterised in that the signalling circuit (11) and the useful circuit (12) each consist of a connection line between a subscriber terminal device (1, 1') and the individually assigned subscriber circuit (10, 10') in question, and that the signalling circuit (11) represents an out-slot circuit.

**Revendications**

1. Système pour établir rapidement des liaisons commutées dans des réseaux de communication, en particulier dans des réseaux de transmission numérique de messages à centraux automatiques commandés par calculateur, où un circuit de signalisation (11) réagissant relativement lentement et un circuit utile (12) réagissant relativement rapidement sont prévus chaque fois entre un terminal d'abonné (1) et le central (2) auquel il est rattaché, qui forme un nœud du réseau de communication (3), le circuit utile (12) réagissant relativement rapidement permettant également de transmettre des informations de sélection, caractérisé en ce que, pour l'établissement rapide d'une liaison commutée de départ, un signal de départ (S1) est transmis, dans une première phase, à travers le circuit de signalisation à réaction lente (11), du terminal d'abonné (1) au central (2), sous l'effet duquel un récepteur de sélection rapide (21), qui est commun à au moins un groupe d'abonnés, est couplé, dans le central, à un circuit d'abonné (10) associé individuellement à l'abonné concerné, que le récepteur de sélection rapide (21), dans une deuxième phase, transmet un signal de réponse ou d'attente (S2) à travers le circuit utile à réaction rapide (12) au terminal d'abonné (1) et que le terminal d'abonné (1), dans une troisième phase, transmet au central (2), à travers le circuit utile à réaction rapide (12) et sous forme d'un bloc d'information (I) unique, l'information de sélection rapide (I1) correspondant à la liaison commutée dont l'établissement est désiré et un signal de fin (I3) qui suit l'information utile (I2) dans le temps, après quoi le récepteur de sélection rapide (21), après avoir déclenché de façon en soi connue l'établissement de la liaison désirée, est déconnecté automatiquement ou se déconnecte automatiquement du circuit d'abonné (10).

2. Système selon la revendication 1, caractérisé en ce que, après l'établissement rapide de la liaison de départ, un signal d'accusé de réception (Q), confirmant l'information de sélection rapide (I1), est transmis à travers le circuit utile à réaction rapide (12) par le central (2') auquel est rattaché le terminal d'abonné 1' demandé au terminal d'abonné 1 de départ, cette information de sélection rapide pouvant également indiquer que le terminal (1') demandé est prêt à recevoir.

3. Système selon la revendication 1, caractérisé en ce que l'information de sélection rapide (I1) est également transmise, pourvue d'un indicateur de priorité, entre les centraux (2, 2') concernés.

4. Système selon les revendications 2 et 3, caractérisé en ce que, sous l'effet de l'indicateur de priorité transmis entre les centraux (2, 2'), le circuit d'abonné (10') auquel est rattaché individuellement le terminal (1') demandé est couplé à un récepteur de sélection rapide (21') qui reçoit le désir d'établissement de liaison en vue de la transmission rapide à l'abonné demandé.

5. Système selon la revendication 1, caractérisé en ce qu'une identification de numéro d'appel du terminal d'abonné (1) de départ est effectué au moyen du récepteur de sélection rapide (21) et en ce que le résultat de l'identification est transmis sous forme d'une information supplémentaire à l'abonné appelé, à travers le circuit utile à réaction rapide (12), de sorte que le terminal d'abonné (1') demandé peut déclencher l'établissement d'une liaison de retour vers le terminal d'abonné (1) de départ original.

6. Système selon l'une des revendications précédentes, caractérisé en ce que le circuit de signalisation (11) et le circuit utile (12) sont réalisés par une ligne de liaison prévue chaque fois entre un terminal d'abonné (1 ou 1') et le circuit d'abonné (10 ou 10') concerné, qui lui est associé individuellement, et que le circuit de signalisation (11) représente un circuit de signal hors bande (circuit out-slot).

# FIG 1

# FIG 2

# FIG 3